# EUROPÄISCHE PATENTANMELDUNG

(11) **EP 1 205 348 A2**
(43) Veröffentlichungstag der Anmeldung: **15.05.2002**
(21) Anmeldenummer: 01125956.1
(22) Anmeldetag: 31.10.2001
(51) Int. Cl.: B60Q 1/115

(54) **Verfahren zur Leuchtweitenregelung von Kraftfahrzeugbeleuchtungseinrichtungen und Leuchtweitenregelungseinrichtungen**

(30) Priorität: 07.11.2000 DE 10055039
(71) Anmelder: Hella KG Hueck & Co., 59552 Lippstadt (DE)
(72) Erfinder: Kasprzok, Ralf, 33428 Harsewinkel (DE); Neumann, Andreas, 59555 Lippstadt (DE)

(57) **Zusammenfassung**

Die vorliegende Erfindung betrifft ein Verfahren zur Leuchtweitenregelung und eine Leuchtweitenregelungseinrichtung für ein Kraftfahrzeug, bei dem abhängig von der Karosserieneigung aus Meßwerten zur dynamischen Einstellung der Beleuchtungseinrichtungen ein Sollwert gebildet wird zur Ansteuerung von Beleuchtungsstellern zur Einstellung der Neigung der Kraftfahrzeugbeleuchtungseinrichtungen. Um die Regelcharakteristik zu verbessern, schlägt die Erfindung vor, daß als Meßwert zur Ermittlung eines zukünftigen Ansteuersollwerts zumindest ein solcher Betriebsparameter einer Fahrzeugkomponente mit einbezogen wird, der zeitlich vorlaufend mit einer zu erwartenden Karosserieneigung korreliert ist.

## Beschreibung

Die vorliegende Erfindung bezieht sich auf ein Verfahren zur Leuchtweitenregelung von Kraftfahrzeugbeleuchtungseinrichtungen, bei dem abhängig von der Karosserieneigung aus Meßwerten zur dynamischen Einstellung der Beleuchtungseinrichtungen ein Sollwert gebildet wird zur Ansteuerung von Beleuchtungsstellgliedern zur Einstellung der Neigung der Kraftfahrzeugbeleuchtungseinrichtungen. Eine Leuchtweitenregelungseinrichtung ist ebenfalls Gegenstand der Erfindung.

Bei einer dynamischen Leuchtweitenregelung sind die Kraftfahrzeugbeleuchtungseinrichtungen, nämlich die Fahrscheinwerfer mittels geeigneter Stellantriebe um eine Fahrzeugquerachse drehbar. Durch eine entsprechende Ansteuerung dieser Stellantriebe kann die Stellung der Scheinwerfer relativ zum Untergrund auf eine gleichbleibende Leuchtweite eingestellt werden, und zwar insbesondere dann, wenn sich die Neigung der Karosserie relativ zum Untergrund durch Fahrbahnenebenheiten oder Brems- bzw. Beschleunigungsvorgänge ändert.

Im Stand der Technik, wie er sich beispielsweise aus der DE 38 34 764 C2 und der EP 0 803 401 A2 ergibt, werden bereits Leuchtweitenregelungseinrichtungen und Verfahren zur Leuchtweitenregelung beschrieben, welche eine dynamische Verstellung der Scheinwerfer unter Berücksichtigung der momentanen Neigung der Fahrzeugkarosserie umfassen. Der dazu vorgeschlagene regelungstechnische Ansatz sieht vor, mittels Neigungssensoren die momentane Neigung der Kraftfahrzeugkarosserie zu erfassen und aus diesen Meßwerten Regelungssollwerte für die Einstellung der Fahrzeugscheinwerfer relativ zur Karosserie zu bilden. Auf die derart vorgegebene Sollposition werden die Fahrzeugscheinwerfer mittels der Stellantriebe eingestellt.

Die bekannten Leuchtweitenregelungsverfahren und -einrichtungen sehen vor, daß mittels geeigneter Sensoren die tatsächliche Karosserieneigung bestimmt wird und davon ausgehend eine entsprechende Verstellung der Beleuchtungseinrichtungen erfolgt. Im Grundsatz ist dadurch zwar eine dynamische Leuchtweitenregelung realisierbar. Allerdings macht sich die unvermeidbare Trägheit des Regelsystems, die durch Totzeiten, Massenträgheit der Stellsysteme und dergleichen bestimmt wird insbesondere bei schnellen Karosserieneigungsänderungen nachteilig bemerkbar. So kommt es beim scharfen Beschleunigen mitunter zu einer Gefährdung des Gegenverkehrs durch das sogenannte Anfahrblitzen, oder einer Beeinträchtigung der Sicht beim Bremsen oder Gangwechsel durch das sogenannte Schalteinnicken. Diese Nachteile lassen sich in der Praxis nicht vermeiden, da hochsensible, schnell ansprechende und dabei dennoch robuste Steuer- und Regelungseinrichtungen nur mit erheblichem, nicht akzeptablem Aufwand realisierbar wären.

Der vorliegenden Erfindung liegt daher die Aufgabenstellung zugrunde, ein Verfahren zur Leuchtweitenregelung sowie eine Leuchtweitenregelungseinrichtung anzugeben, welche bezüglich der vorgenannten Probleme eine verbesserte Funktionalität hat.

Zur Lösung dieser Aufgabenstellung sieht das erfindungsgemäße Leuchtweitenregelungsverfahren vor, daß als Meßwert zur Ermittlung eines zukünftigen Ansteuersollwerts zumindest ein solcher Betriebsparameter einer Fahrzeugkomponente mit einbezogen wird, der zeitlich vorlaufend mit einer zu erwartenden Karosserieneigung korreliert ist.

Eine Besonderheit der Erfindung gegenüber dem vorbekannten Stand der Technik besteht darin, daß zur Leuchtweitenregelung der Scheinwerfer auch auf solche Ausgangsgrößen, d. h. Meßwerte zurückgegriffen wird, welche sich nicht unmittelbar auf eine bereits aufgetretene Karosserieneigung beziehen, sondern kausal verknüpft sind mit einer zu einer zu erwartenden Karosserieneigungsänderung. Dies sind beispielsweise aktuelle Betriebsparameter von Stellgliedern der Antriebs- oder Bremseinrichtungen. Dadurch, daß auf deren Betätigung mit einem systembedingten Zeitversatz ein Beschleunigungs- oder Bremsmanöver eingeleitet wird, welches mit einer Karosserieneigung um die Querachse einhergeht, lassen sich aus diesen aktuellen Betriebswerten über entsprechende Algorithmen vorab Vorhersagen über wahrscheinlich eintretende Karosserieneigungsänderungen machen. Ein besonderer Vorteil des erfindungsgemäßen Verfahrens besteht somit darin, daß durch die Möglichkeit der Vorherbestimmung einer zu erwartenden Karosserieneigungsänderung die Regelgeschwindigkeit zur optimalen Einstellung der Beleuchtungseinrichtungen deutlich verringert werden kann. Der bislang unvermeidliche Regelverzug, der sich aus der Totzeit und Laufzeit des Regelkreises ergibt, kann nämlich durch die vorlaufende Auswertung der Meßwerte im Hinblick auf die Bestimmung von Ansteuersollwerten überbrückt werden. Dadurch kann die Blendwirkung beim Beschleunigen bzw. der Sehweiteverlust beim Bremsen weitgehend vermieden werden.

Als Ausgangswert zur Bestimmung des zukünftigen Ansteuersollwerts kann der momentane Wert des Betriebsparameters erfaßt und verwendet werden. Dabei handelt es sich beispielsweise um den Absolutwert eines Stellorgans oder eines abgeleiteten Meßsignals, beispielsweise der Stellung des Gaspedals, der Kupplung, der Drosselklappenstellung oder ein Drehmoment-Last-Signal oder dergleichen. Aus der augenblicklichen Stellung beispielsweise des Bremspedals kann beispielsweise auf einen darauf folgenden Bremsvorgang geschlossen werden, bei dem sich die Karosserie um die Querachse nach vorne neigt. Umgekehrt kann aus einem Gas-Signal oder der momentanen Drosselklappenstellung im Ansaugtrakt auf eine einsetzende Fahrzeugbeschleunigung geschlossen werden, welche mit einer Karosserieneigung nach hinten einhergeht.

Vorteilhaft ist es weiterhin, wenn zusätzlich oder alternativ zur Verwendung von Absolutwerten von Betriebsparametern die Änderungsgeschwindigkeit des Wertes eines Betriebsparameters erfaßt und verwendet wird. Dies hat den Vorteil, daß unter Berücksichtigung des jeweiligen Betriebszustands auf die Amplitude der zu erwartenden Karosserieneigung bzw. Karosserieneigungsänderung geschlossen werden kann. Somit kann bei der Berechnung des Ansteuersollwerts nicht nur eine qualitative, sondern auch eine quantitative Bewertung der Meßsignale vorgenommen werden.

Über die erfindungsgemäße Berücksichtigung von vorlaufenden, zeitlich versetzt auf eine zu erwartende Karosserieneigung bzw. Karosserieneigungsänderung Einfluß nehmende Betriebsparameter können vorzugsweise auch momentane Istwerte der Karosserieneigung von Neigungssensoren erfaßt werden und zur Berechnung eines Reglersollwerts verwendet werden. Als Neigungssensoren können beispielsweise Achssensoren verwendet werden, die den tatsächlichen Neigungszustand der Karosserie im wesentlichen zeitgleich anzeigen, d. h. als Ausgangswert für die Berechnung der Scheinwerferneigung relativ zur Karosserie zugänglich machen. Der Reglersollwert, der im Stand der Technik allein als Ausgangswert zur Leuchtweitenregelung herangezogen wird, kann bei dem erfindungsgemäßen Verfahren auf besonders vorteilhafte Weise mit verwendet werden.

Besonders vorteilhaft ist in diesem Zusammenhang eine Kombination der erfindungsgemäßen und der vorbekannten Verfahren zur Leuchtweitenregelung. Hierbei wird der - aus den zeitlich vorlaufenden Betriebsparametern ermittelte - Ansteuersollwert nach einer vorgegebenen Verzögerungszeit mit dem - aus den momentanen Istwerten der Karosserieneigung berechneten - Reglersollwert verglichen und bei einem vorgegebenen Vergleichsergebnis der Beleuchtungssteller auf den Reglersollwert eingestellt. Das vorgegebene Vergleichsergebnis kann beispielsweise vorsehen, daß der Ansteuersollwert und der Reglersollwert innerhalb bestimmter Toleranzen gleich sind. Die Verzögerungszeit bildet dabei eine Zeitkonstante die, gegebenenfalls in Abhängigkeit vom jeweiligen Beschleunigungs- bzw. Fahrzustand des Fahrzeugs variiert werden kann und stellt eine Filterzeitkonstante dar, welche bestimmt, wie der Ansteuersollwert und der Reglersollwert in die Einstellung der Beleuchtungseinrichtungen mit einbezogen werden. Durch den Ansteuersollwert wird eine Regelvorgabe realisiert, welche es ermöglicht, den tatsächlichen Reglersollwert mit deutlich kürzerer Reaktionszeit einzuregeln, als wenn keine Regelvorgabe erfolgen würde. Dadurch schafft das erfindungsgemäße Verfahren die Möglichkeit, die Regelgeschwindigkeit entsprechend zu erhöhen, so daß die Leuchtweitenregelung auch auf kurzfristig auftretende Karosserieneigungsänderungen reagieren kann.

Bei dem erfindungsgemäßen Verfahren können als vorlaufende Betriebsparameter grundsätzlich sämtliche Meßsignale des Fahrzeug-Antriebsystems oder Bremssystems erfaßt und verwendet werden, die im Zusammenhang stehen mit Beschleunigungs- oder Bremsvorgängen und auf diese Weise kausal verknüpft sind mit zu erwartenden Karosserieneigungsänderungen. Dies kann beispielsweise die Stellung von Brems- oder Kupplungsstellern, Gas-Stelleinrichtungen sein, oder durch Auswertung von Motormomenten-Informaionen oder dem Verhältnis der Motordrehzahl zur Geschwindigkeit erfolgen. Weitere Möglichkeiten bestehen beispielsweise in der Auswertung des Kraftstoffverbrauchsignals. Zur Istwertmessung der Karosserieneigung können bekannte Neigungssensoren verwendet werden, beispielsweise Achssensoren.

Eine erfindungsgemäße Leuchtweitenregelungseinrichtung zur Durchführung des vorangehend erläuternden Verfahrens sieht vor, daß Meßwerterfassungseinrichtungen, damit verbundene Steuer- und Regeleinrichtungen sowie mit Beleuchtungsstellern versehene Beleuchtungseinrichtungen vorhanden sind. Die Meßwerterfassungseinrichtungen sind erfindungsgemäß zur Erfassung von Betriebsparametern von solchen Fahrzeugkomponenten ausgebildet, deren momentaner Betriebszustand korreliert ist mit einer zukünftigen Karosserieneigung. Dadurch ist es möglich, daß vorangehend erläuterte erfindungsgemäße Leuchtweitenregelungsverfahren praktisch umzusetzen.

Im einzelnen kann vorgesehen sein, daß die Meßwerterfassungseinrichtungen einen Signalgeber umfassen, der beispielsweise die Stellung von Gas-, Kupplungs- oder Bremsstellern angibt. Weiterhin können die Meßwerterfassungseinrichtungen zumindest einen Neigungssensor umfassen, welcher die aktuelle Fahrzeugneigung angibt.

Die Steuereinrichtung kann eine an eine Meßwerterfassungseinrichtung angeschlossene Ansteuersollwertbestimmungseinrichtung und/oder Reglersollwertbestimmungseinrichtung umfassen. Die Ansteuersollwertbestimmungseinrichtung dient zur Berechnung von Ansteuersollwerten aus mit vorlaufenden Betriebsparametern korrelierten Meßwerten. Die Reglersollwertbestimmungseinrichtungen dienen zur Berechnung von Reglersollwerten aus Meßwerten, beispielsweise vom Neigungssensor, welche die tatsächliche aktuelle Fahrzeugneigung angeben.

Die Steuereinrichtungen, nämlich die Ansteuer- und Reglersollwertbestimmungseinrichtung sind bevorzugt an eine Vergleichseinrichtung angeschlossen. Diese gibt ein Ausgangssignal zu Ansteuerung einer Stelleinrichtung ab, wenn die anstehenden Ansteuer- bzw. Reglersollwerte in einem bestimmten Verhältnis zueinander stehen, bevorzugt gleich sind.

Die Ansteuersollwertbestimmungseinrichtung, welche aus den gemessenen Betriebsparametern auf zukünftig erfolgende Karosserieneigungsänderungen schließt, ist bevorzugt über eine Verzögerungseinrichtung an die vorgenannte Vergleichseinrichtung angeschlossen. Die Verzögerungseinrichtung beaufschlagt den ausgegebenen Ansteuersollwert mit einer Zeitkonstanten, welche gegebenenfalls variabel in Abhängigkeit vom Beschleunigungs-bzw. Fahrzustand vorgegeben werden kann. In den Vergleichseinrichtungen werden so zeitlich aufeinander folgende Meßwerte von zu erwartenden und tatsächlich eintretenden Karosserieneigungen bzw. Karosserieneigungsänderungen berücksichtigt.

Der Ausgang der Vergleichseinrichtung kann mit einer Umschalteinrichtung verbunden sein, welche wahlweise den Ausgang einer an die Vergleichseinrichtung angeschlossenen Steuereinrichtung mit einem Beleuchtungssteller verbindet. Dadurch kann eine Umschaltung erfolgen, je nachdem ob der Beleuchtungssteller auf den Ansteuersollwert der Ansteuersollwertbestimmungseinrichtung oder den Reglersollwert der Reglersollwertbestimmungseinrichtung umgeschaltet wird. Diese Umschaltung erfolgt in Abhängigkeit vom Vergleichsergebnis. Vorteilhaft ist es beispielsweise, den Stellantrieb auf den Reglersollwert umzuschalten, wenn in der Vergleichseinrichtung Gleichheit von Ansteuer- und Reglersollwert festgestellt wird. Hingegen ist es möglich, bei raschen Änderungen, wenn Ansteuer- und Reglersollwert voneinander abweichen, den Stellantrieb auf die Ansteuersollwertbestimmungseinrichtung umzuschalten.

Im folgenden wird das erfindungsgemäße Verfahren anhand eines Ausführungsbeispiels einer erfindungsgemäßen Leuchtweitenregelungseinrichtung unter Bezugnahme auf die beiliegende Zeichnung näher erläutert. Im einzelnen zeigt:

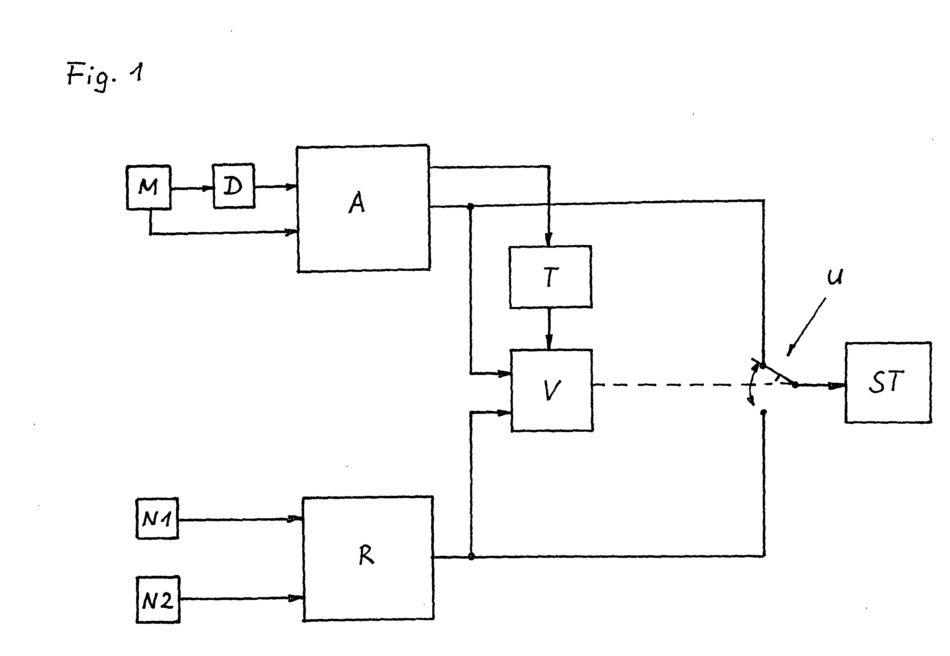

- Fig. 1: ein schematisches Blockschaltbild einer erfindungsgemäßen Leuchtweitenregelungseinrichtung.

In Fig. 1 ist mit M eine Meßwerterfassungseinrichtung bezeichnet, die zur Erfassung von Betriebsparametern von solchen Fahrzeugkomponenten ausgebildet ist, deren momentaner Betriebszustand korreliert ist mit einer zukünftigen Karosserieneigung. Beispielsweise gibt M die Stellung des Gas-, Brems- oder Kupplungspedals oder der Drosselklappe an.

Die Meßwerterfassungseinrichtung ist einmal direkt und einmal über einen Differenzierer D mit einer Ansteuersollwertbestimmungseinrichtung A verbunden. Der Differenzierer D sorgt für eine zeitliche Ableitung des Meßwerts, so daß eine Meßwertänderung an die Ansteuersollwertbestimmungseinrichtung A ausgegeben wird.

Weiterhin sind Neigungssensoren N1 und N2 vorgesehen. Diese sind an die Eingänge einer Reglersollwertbestimmungseinrichtung R angeschlossen. Diese ermittelt aus den Neigungsmeßwerten unter Berücksichtigung von Faktoren für die jeweiligen Sensoren einen aktuellen Reglersollwert.

Die Ausgänge von A und R sind mit den Eingängen einer Vergleichseinrichtung V verbunden. Zwischen einem Ausgang der Ansteuersollwertbestimmungseinrichtung A und einem Eingang der Vergleichseinrichtung V ist weiterhin eine Verzögerungseinrichtung T vorgesehen. Dabei handelt es sich um einen Zeitgeber, der das Ausgangssignal von A, nämlich den Ansteuersollwert mit einer Zeitverzögerung t1 an die Vergleichseinrichtung V weitergibt.

Der Ausgang der Vergleichseinrichtung V wirkt auf einen Umschalter U. Durch diesen kann ein Beleuchtungssteller ST wahlweise auf den Ausgang der Ansteuersollwertbestimmungseinrichtung A oder der Reglersollwertbestimmungseinrichtung R umgeschaltet werden.

Aus dem Absolutwert des von der Meßwerterfassungseinrichtung M abgegebenen Meßsignals sowie des durch den Differenzierer D zeitlich differenzierten Meßsignal berechnet die Ansteuersollwertbestimmungseinrichtung A einen Ansteuersollwert für eine zukünftig, also nach einer Zeit t1 zu erwartenden Karosserieneigungsänderung. Zeitversetzt dazu, also um die Zeitkonstante t1 später berechnet die Reglersollwertbestimmungseinrichtung R aus den aktuellen Meßwerten der Neigungssensoren N1 und N2 einen Reglersollwert, der die tatsächlich vorliegende Karosserieneigung angibt. Über die Verzögerungseinrichtung T wird der vorlaufende Ansteuersollwert mit dem aktuellen Reglersollwert in der Vergleichseinrichtung V verglichen. Ergibt dieser Vergleich, daß Gleichheit vorliegt, wird der Umschalter U so umgeschaltet, daß der Reglersollwert von R als Stellgröße zum Beleuchtungssteller ST gelangt. Bei Abweichungen erfolgt die Umschaltung auf den Ansteuersollwert von A.

Durch die wahlweise Berücksichtigung des aus vorlaufenden Meßwerten ermittelten Ansteuersollwerts und des aus aktuellen Neigungsmeßwerten ermittelten Reglersollwerts läßt sich eine dem jeweiligen Bedarfsfall besonders gut angepaßte Leuchtweitenregelung realisieren, die bei hohen Abweichungen des Ansteuersollwerts vom Reglersollwert besonders schnell reagieren kann. Ansonsten wird durch die Verzögerungseinrichtung T abhängig von der darin vorgegebenen Zeitkonstanten t1 eine Leuchtweitenregelung in Abhängigkeit von der tatsächlichen Karosserieneigung umgeschaltet, welche zur Kompensierung langsamer Karosserieneigungsänderungen gut geeignet ist.

## Patentansprüche

1. Verfahren zur Leuchtweitenregelung von Kraftfahrzeugbeleuchtungseinrichtungen, bei dem abhängig von der Karosserieneigung aus Meßwerten zur dynamischen Einstellung der Beleuchtungseinrichtung ein Sollwert gebildet wird zur Ansteuerung von Beleuchtungsstellern zur Einstellung der Neigung der Kraftfahrzeugbeleuchtungseinrichtungen, **gekennzeichnet dadurch, daß** als Meßwert zur Ermittlung eines zukünftigen Ansteuersollwerts zumindest ein solcher Betriebsparameter einer Fahrzeugkomponente mit einbezogen wird, der zeitlich vorlaufend mit einer zu erwartenden Karosserieneigung korreliert ist.

2. Verfahren nach Anspruch 1, **dadurch gekennzeichnet, daß** der momentane Wert des Betriebsparameters erfaßt und verwendet wird.

3. Verfahren nach Anspruch 1 oder 2, **dadurch gekennzeichnet, daß** eine Änderungsgeschwindigkeit des Betriebsparameters erfaßt und verwendet wird.

4. Verfahren nach einem der Ansprüche 1 bis 3, **dadurch gekennzeichnet, daß** als Meßwerte momentane Istwerte der Karosserieneigung von Neigungssensoren erfaßt werden und zur Berechnung eines Reglersollwerts verwendet werden.

5. Verfahren nach einem oder mehreren der Ansprüche 1 bis 4, **dadurch gekennzeichnet, daß** der Ansteuersollwert nach einer vorgegebenen Verzögerungszeit mit dem Reglersollwert verglichen wird und abhängig vom Vergleichsergebnis der Beleuchtungssteller auf den Ansteuersollwert oder den Reglersollwert umgeschaltet wird.

6. Verfahren nach einem der Ansprüche 1 bis 5, **dadurch gekennzeichnet, daß** als Betriebsparameter ein Meßsignal des Fahrzeug-Antriebssystems verwendet wird, beispielsweise ein Gas- oder Kupplungssignal, ein Drosselklappen- oder Drehmoment-Last-Signal.

7. Verfahren nach einem der Ansprüche 1 bis 6, **dadurch gekennzeichnet, daß** als Betriebsparameter ein Meßsignal des Fahrzeug-Bremssystems verwendet wird, beispielsweise die Stellung des Bremsstellers.

8. Leuchtweitenregelungseinrichtung für ein Kraftfahrzeug, insbesondere zur Durchführung des Verfahrens nach einem der Ansprüche 1 bis 7, mit Meßwerterfassungseinrichtungen (M), damit verbundenen Steuereinrichtungen sowie auf die Beleuchtungseinrichtungen wirkenden Beleuchtungsstellern, **gekennzeichnet dadurch, daß** die Meßwerterfassungseinrichtungen (M) zur Erfassung von Betriebsparametern von solchen Fahrzeugkomponenten ausgebildet sind, deren momentaner Betriebszustand korreliert ist mit einer zukünftigen Karosserieneigung.

9. Leuchtweitenregelungseinrichtung nach Anspruch 8, **dadurch gekennzeichnet, daß** die Meßwerterfassungseinrichtungen (M) einen Signalgeber umfassen.

10. Leuchtweitenregelungseinrichtung nach Anspruch 8 oder 9, **dadurch gekennzeichnet, daß** die Steuereinrichtung eine an eine Meßwerterfassungseinrichtung (M) angeschlossene Ansteuersollwertbestimmungseinrichtung (A) und/oder eine Reglersollwertbestimmungseinrichtung (R) umfassen.

11. Leuchtweitenregelungseinrichtung nach einem der Ansprüche 1 bis 10, **dadurch gekennzeichnet, daß** die Meßwerterfassungseinrichtungen zumindest einen Neigungssensor (N1, N2) umfassen.

12. Leuchtweitenregelungseinrichtung nach einem der Ansprüche 1 bis 11, **dadurch gekennzeichnet, daß** die Steuereinrichtungen (A, R) an eine Vergleichseinrichtung (V) angeschlossen sind.

13. Leuchtweitenregelungseinrichtung nach einem der Ansprüche 1 bis 12, **dadurch gekennzeichnet, daß** die Ansteuersollwertbestimmungseinrichtung (A) über eine Verzögerungseinrichtung (T) an die Vergleichseinrichtung (V) angeschlossen ist.

14. Leuchtweitenregelungseinrichtung nach einem der Ansprüche 1 bis 13, **dadurch gekennzeichnet, daß** die Vergleichseinrichtung (V) mit einer Umschalteinrichtung (U) verbunden ist, welche wahlweise den Ausgang einer an die Vergleichseinrichtung (V) angeschlossenen Steuereinrichtung (A, R) mit einem Beleuchtungssteller (ST) verbindet.
